# FASCICULE DE BREVET EUROPEEN

(11) **EP 0 447 275 B1**
(45) Date de publication et mention de la délivrance du brevet: **15.09.1993**
(21) Numéro de dépôt: 91400329.8
(22) Date de dépôt: 12.02.1991
(51) Int. Cl.: B23K 37/04, B29D 24/00, B60P 1/44, E04B 2/72

(54) **Panneau réalisé par extrusion et procédé de soudage d'un tel panneau**
Extrudierte Platte und Verfahren zur Schweissung einer solchen Platte
Panel produced by extrusion and process for welding such a panel

(30) Priorité: 13.02.1990 FR 9001699
(43) Date de publication de la demande: 18.09.1991
(73) Titulaire: SOCIETE ANONYME HYDRIS, F-35220 Chateaubourg (FR)
(72) Inventeur: Tortellier, Christian Serge, F-35530 Noyal sur Vilaine (FR)
(74) Mandataire: Hoisnard, Jean-Claude

(56) Documents cités:
- EP-A- 0 273 865
- WO-A-86/05754
- FR-A- 2 109 673
- US-A- 2 618 281
- US-A- 3 618 281
- US-A- 3 815 890
- US-A- 4 682 765
- PATENT ABSTRACTS OF JAPAN, vol. 8, no. 100 (M-295)[1537], 11 mai 1984; & JP-A-5 913 577 (MITSUBISHI JUKOGYO K.K.) 24-01-1984

## Description

Les techniques de fabrication de panneaux, tels que ceux constituant les plates-formes de hayons élévateurs montés sur des châssis de véhicules, constituent le domaine d'origine de l'invention.

Conformément à l'art antérieur connu, on sait déjà réaliser par extrusion deux ou trois sous-ensembles d'une plate-forme de hayon élévateur, souvent fortement renforcés par des cloisons internes, et assembler ultérieurement par soudure ces sous-ensembles.

A ce jour, peu de fabricants ont la capacité de réaliser de telles plates-formes, car l'importance des sous-ensembles nécessite des presses d'extrusion très puissantes, par conséquent également très coûteuses.

L'invention a pour but de permettre la réalisation de plate-formes de hayons élévateurs, ou, plus généralement de panneaux, susceptibles de constituer par exemple des planchers, ou des ponts, en assemblant non plus des sous-ensembles de grandes dimensions, mais des profilés simples, exempts de parois de renforcement délimitant des cavités multiples, ou ne comportant qu'une cavité unique, de réalisation facile par extrusion au moyen de presses bien moins puissantes que les presses utilisées actuellement. L'assemblage ultérieur par soudage des divers profilés élémentaires permet de constituer un panneau complet.

L'invention est donc relative à un panneau, notamment destiné à constituer un plancher, tel que celui de la plate-forme d'un hayon élévateur de véhicule, comprenant une première et une deuxième faces et constitué par des sous-ensembles obtenus par extrusion, puis assemblés bord à bord, et enfin soudés le long des bords d'assemblage.

Selon l'invention, ce panneau est caractérisé en ce que : a) un sous-ensemble est constitué par un profilé extrudé, dont la section droite comporte une première aile, qui est parallèle au plan de ladite deuxième face du panneau et qui comporte elle-même deux extrémités appartenant à deux lisières du soudage d'assemblage du panneau, ladite section droite comportant une deuxième aile, qui s'écarte de la première aile à partir de ladite deuxième face du panneau d'une distance, mesurée perpendiculairement à ladite deuxième face du panneau, qui correspond à l'épaisseur dudit panneau, ladite deuxième aile comportant une extrémité libre appartenant à une autre lisière du soudage d'assemblage du panneau ; b) lesdits profilés sont assemblés bord à bord par trois, deux premiers profilés ayant les premières ailes de leurs sections droites adjacentes par l'une des extrémités de chacune desdites premières ailes, cependant que la première aile de la section droite d'un troisième profilé s'étend parallèlement au plan de la deuxième face du panneau et a ses extrémités qui sont adjacentes aux extrémités libres des deuxièmes ailes des sections droites des deux premiers profilés, l'extrémité libre de la deuxième aile de la section droite du troisième profilé étant adjacente auxdites extrémités adjacentes des premières ailes des sections droites des deux dits premiers profilés ; c) les lisières auxquelles appartiennent lesdites extrémités adjacentes des premières ailes des sections droites des deux premiers profilés et de la deuxième aile de la section droite du troisième profilé sont soudées ensemble ; d) les lisières auxquelles appartiennent lesdites extrémités adjacentes de la deuxième aile de la section droite de chacun des deux premiers profilés et de la première aile de la section droite du troisième profilé sont soudées ensemble.

Les avantageuses dispositions suivantes sont, en outre, de préférence adoptées :
- l'extrémité libre de la deuxième aile de la section droite d'un profilé est disposée à des distances, mesurées parallèlement au plan de la première aile, de chacune des extrémités de ladite première aile, qui sont sensiblement égales ;
- selon une première variante de réalisation, e) l'extrémité libre de la deuxième aile de la section droite dudit troisième profilé comporte deux branches latérales qui divergent à partir de l'axe de ladite deuxième aile, de part et d'autre d'une branche médiane disposée parallèlement à l'axe et dans le prolongement de ladite deuxième aile ; et f) chaque extrémité d'une première aile de la section droite d'un desdits premiers profilés est délimitée par une face interne et par une face extrême, toutes deux, après accostage desdits deux premiers profilés et du troisième profilé pour soudage, constituant un appui de ladite extrémité d'une première aile sur l'extrémité d'une desdites branches latérales et sur la face de la branche médiane orientée vers ladite branche latérale de la section droite dudit troisième profilé, respectivement, ladite face extrême d'une extrémité de ladite première aile de la section droite dudit premier profilé se prolongeant en une face oblique par rapport à l'axe de la deuxième aile de la section droite dudit troisième profilé ; de sorte qu'après réalisation dudit accostage en vue du soudage un chanfrein de soudage, dont le fond constitue un plateau de soudage, est constitué par les faces obliques des extrémités des deux premières ailes des premiers profilés et par une face extrême de ladite branche médiane, sensiblement perpendiculaire à l'axe de la deuxième aile de la section droite du troisième profilé, formant ledit plateau de soudage ;
- deux cavités sont ménagées entre la branche médiane de la deuxième aile et, l'une, l'une des branches latérales, l'autre, l'autre branche latérale de ladite deuxième aile de la section droite d'un troisième profilé, cependant qu'après accostage des deux premiers et du troisième profilé en vue du soudage, mais avant ledit soudage, les deuxdites cavités sont fermées par lesdites faces internes et faces extrêmes délimitant les extrémités des premières ailes des sections droites des premiers profilés ;
- une lèvre, solidaire de chaque première aile de la section droite d'un premier profilé, s'écarte de la première aile à partir de la face interne de ladite première aile, et, après ledit accostage des profilés en vue de leur soudage, est appliquée sur la face externe d'une branche latérale de la section droite du troisième profilé ;
- selon une deuxième variante de réalisation, g) l'extrémité libre de la deuxième aile de la section droite d'un profilé comporte deux ergots qui s'étendent de part et d'autre du plan perpendiculaire à la première aile de la section droite dudit profilé, passant par la partie centrale de ladite extrémité libre, les faces des deux ergots, qui sont les plus éloignées de ladite première aile, étant disposées sensiblement dans le prolongement l'une de l'autre ; et, h) chaque extrémité d'une première aile de la section droite d'un profilé comporte un logement de réception d'un ergot d'un autre profilé, logement dont l'une des parois se raccorde à la face externe de ladite première aile par un chanfrein ; de manière qu'après accostage de deux premiers et d'un troisième profilé pour soudage, les ergots de l'extrémité libre de la deuxième aile de la section droite du troisième profilé sont contenus, chacun, dans un logement de réception d'une extrémité de la première aile de la section droite de l'un des deuxdits premiers profilés et qu'un chanfrein de soudage est défini par les chanfreins desdites parois des logements de réception et par la zone de raccord du prolongement mutuel desdites faces des deux ergots et a la forme générale d'un V dont le fond est constitué par ladite zone du raccord de l'extrémité libre de la deuxième aile de la section droite du troisième profilé, formant support du bain de soudure au moment du soudage ;
- les sections droites de certains profilés au moins ont, chacune, une forme générale en T, la barre transversale du T constituant la première aile de cette section droite et la jambe du T constituant la deuxième aile de la section droite ; ou encore les sections droites de certains profilés au moins ont, chacune, une forme générale en coin, comportant une deuxième aile qui est plus courte que la première aile et qui s'étend obliquement par rapport à cette première aile, à partir d'une extrémité vers la partie médiane de la première aile, selon un angle aigu par rapport à elle ; ou également les sections droites de certains profilés au moins comportent, chacune, un triangle fermé unique dont les côtés sont constitués par une partie de la première aile, la deuxième aile et une troisième aile disposée sensiblement symétriquement à ladite deuxième aile par rapport à une perpendiculaire à ladite première aile passant par l'extrémité libre de la deuxième aile ;
- les sections droites de certains profilés au moins peuvent plus généralement comporter, chacune, un polygone unique de renforcement de la deuxième aile ;
- trois variantes particulières de réalisation peuvent être notées dans lesquelles, soit, hormis ses parties extrêmes, ce panneau est constitué exclusivement par l'assemblage de profilés ayant une section droite conformée en un T ; soit, hormis ses parties extrêmes, ce panneau est constitué exclusivement par l'assemblage de profilés ayant une forme générale en coin ; soit, hormis ses parties extrêmes, ce panneau est constitué par l'assemblage de profilés supérieurs d'un premier type avec des profilés inférieurs d'un deuxième type, les premier et deuxième types de profilés étant choisis parmi les deux types dont les sections droites ont une forme en T et dont les sections droites comportent un triangle fermé unique ;
- une des extrémités du panneau est constituée par un avant dernier profilé, dont la section droite comporte deux ailes formant un angle et par un dernier profilé, dont la section droite ferme le dit angle et est soudée aux extrémités des deuxdites ailes, cependant qu'un support du panneau, apte à supporter ledit panneau, est fixé sur le dernier profilé au moyen d'ensembles de vis et d'écrous, l'un des éléments de chaque ensemble étant disposé à l'intérieur de la surface fermée comprise entre les deux ailes et la section droite du dernier profilé qui ferme ledit angle, lesdites vis traversant et assemblant le support et le dernier profilé, et qu'une au moins desdites ailes de l'avant dernier profilé a un prolongement conformé en un bord rabattu, qui est disposé au-delà d'une des soudures d'assemblage desdits dernier et avant dernier profilés, adjacent à ladite soudure, et qui est pincé entre ledit élément d'un ensemble de vis et d'écrou et ledit dernier profilé ;
- ledit élément est un écrou constitué par un taraudage réalisé dans une contre-plaque disposée parallèlement au dernier profilé, à l'intérieur de ladite surface fermée ;
- le bord rabattu est disposé à la partie supérieure de la section droite de l'avant dernier profilé, dans une configuration sensiblement horizontale de la face supérieure dudit panneau, cependant que ledit support réalise le support en porte-à-faux du panneau.

L'invention a également pour objet un procédé de soudage d'un panneau selon l'une ou plusieurs des définitions précédentes, selon lequel : i) on réalise le montage pivotant, autour d'un axe de pivotement, selon un angle au moins égal à 180°, d'un cadre de montage ; j) on met en place, les uns à côté des autres, en vue de leur montage, une première série de profilés dits inférieurs, en vue de leur fixation provisoire sur ledit cadre de montage, leurs faces inférieures étant soutenues par le cadre de montage de manière telle que les lisières devant être soudées restent dégagées ; k) on met en place les profilés, dits supérieurs, qui complètent le panneau ; l) on fixe provisoirement lesdits profilés supérieurs et inférieurs sur ledit cadre de montage, de manière telle que les lisières des profilés supérieurs devant être soudées restent elles aussi dégagées et les faces supérieures des profilés supérieurs étant disposées sensiblement horizontalement ; m) on réalise les soudures d'assemblage desdites faces supérieures des profilés supérieurs ; n) on fait pivoter en bloc le cadre de montage et l'ensemble des profilés qui y sont provisoirement fixés de manière à orienter vers le haut et à rendre sensiblement horizontale la face du panneau initialement orientée vers le bas ; p) on réalise les soudures d'assemblage des faces des profilés inférieurs initialement orientées vers le bas.

De manière préférée, on rend parallèles à l'axe de pivotement les lisières devant être soudées.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 est la section droite d'un sous-ensemble obtenu par extrusion, conforme à l'art antérieur connu ;
- la figure 2 représente, en section droite, un pont basculant constitué par l'assemblage de plusieurs sous-ensembles analogues à celui de la figure 1 ;
- la figure 3 est une section transversale de plusieurs profilés conformes à l'invention disposés les uns en regard des autres avant assemblage définitif ;
- la figure 4 est une section droite de trois profilés conformes à l'invention dans leur configuration d'assemblage, avant soudage, selon un premier mode de réalisation de ces profilés ;
- la figure 5 est une section droite, prolongée par une perspective partielle, d'un panneau réalisé à partir du montage avant assemblage des profilés représenté sur la figure 3 ;
- la figure 6 est une section droite de trois profilés conformes à un deuxième mode de réalisation de l'invention, disposés les uns en regard des autres avant assemblage définitif ;
- la figure 7 est une section droite d'un panneau réalisé à partir du montage de la figure 6 ;
- la figure 8 est une section droite de trois profilés conformes à un troisième mode de réalisation de l'invention, disposés les uns en regard des autres avant assemblage définitif ;
- la figure 9 est une section droite d'un panneau réalisé à partir du montage de la figure 8 ;
- la figure 10 est une section droite d'un panneau susceptible d'être réalisé à partir du montage de la figure 8 ;
- la figure 11 est une section droite d'une extrémité d'un panneau conforme à l'invention ;
- les figures 12 et 13 illustrent les phases du procédé de soudage de panneau conforme à l'invention ;
- la figure 14 est une section droite, analogue à celle de la figure 4, représentant une variante de réalisation et de présentation avant soudage de trois profilés conformes à l'invention ; et,
- la figure 15 représente, après agrandissement, le détail D de la figure 14.

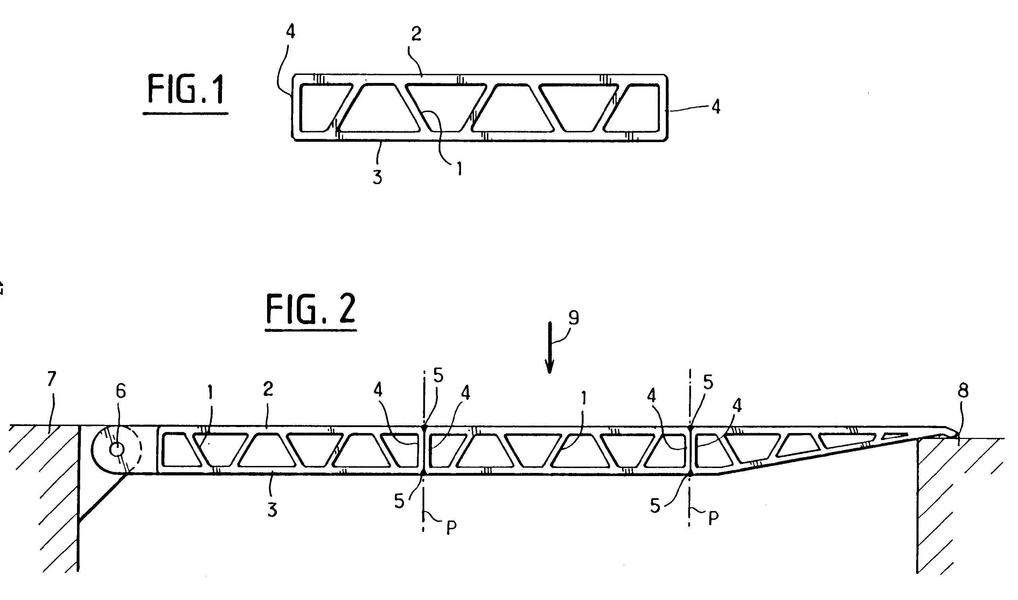

Le sous-ensemble de la figure 1, conforme à l'art antérieur connu, est la section droite d'une partie obtenue uniquement par extrusion, en un alliage d'aluminium, de la plate-forme d'un hayon élévateur, munie de voiles internes de raidissement 1 qui s'étendent entre la paroi supérieure 2 et la paroi inférieure 3, cette partie de plate-forme étant limitée par deux cloisons transversales d'extrémités 4.

La figure 2 montre l'assemblage de trois parties analogues à celle de la figure 1, l'une d'elles ayant toutefois une forme en coin. Après juxtaposition des cloisons d'extrémité 4 de ces parties, deux à deux, des cordons de soudure 5, disposés le long des lisières supérieures et inférieures desdites cloisons 4, rendent solidaires les trois dites parties, les cordons 5 étant situés l'un au-dessus de l'autre dans le plan P d'accostage de deux parties adjacentes de l'assemblage. Cet assemblage constitue le plancher d'un pont levant, dont une première extrémité est montée pivotante autour d'un axe horizontal 6 sur une première culée 7, et dont l'autre extrémité, en forme de coin, est susceptible d'être en appui, comme représenté sur la figure, sur une deuxième culée 8. La charge que peut supporter ce pont est schématisée par la flèche verticale 9 et engendre des contraintes de flexion notamment concentrée dans les cordons de soudure 5, superposés deux à deux dans des mêmes plans verticaux P.

Bien entendu, d'autres variantes d'utilisation de telles structures sont connues, telles que la réalisation d'un pont simple (non levant), ainsi que la réalisation de la plate-forme d'un hayon élévateur adapté à un véhicule et supporté en porte-à-faux par des bras attelés au châssis du véhicule.

Fabriquer par extrusion un sous-ensemble tel que celui de la figure 1 nécessite des moyens importants, en particulier des presses puissantes, qui grèvent le prix de revient de chaque sous-ensemble fabriqué. En outre les filières d'extrusion, de grandes dimensions, sont elles aussi coûteuses, ce qui incite à ne pas en multiplier inconsidérément le nombre, et ce qui conduit parfois à admettre des dimensions et/ou des formes de sous-ensembles non exactement adaptées à l'utilisation particulière recherchée. Enfin, la concentration des cordons de soudure 5 d'assemblage de deux parties adjacentes dans un même plan vertical P ne facilite pas l'exécution de ces cordons de soudure, tout en créant des problèmes de déformations thermiques, au moment des soudages, qui compliquent encore la réalisation de l'assemblage.

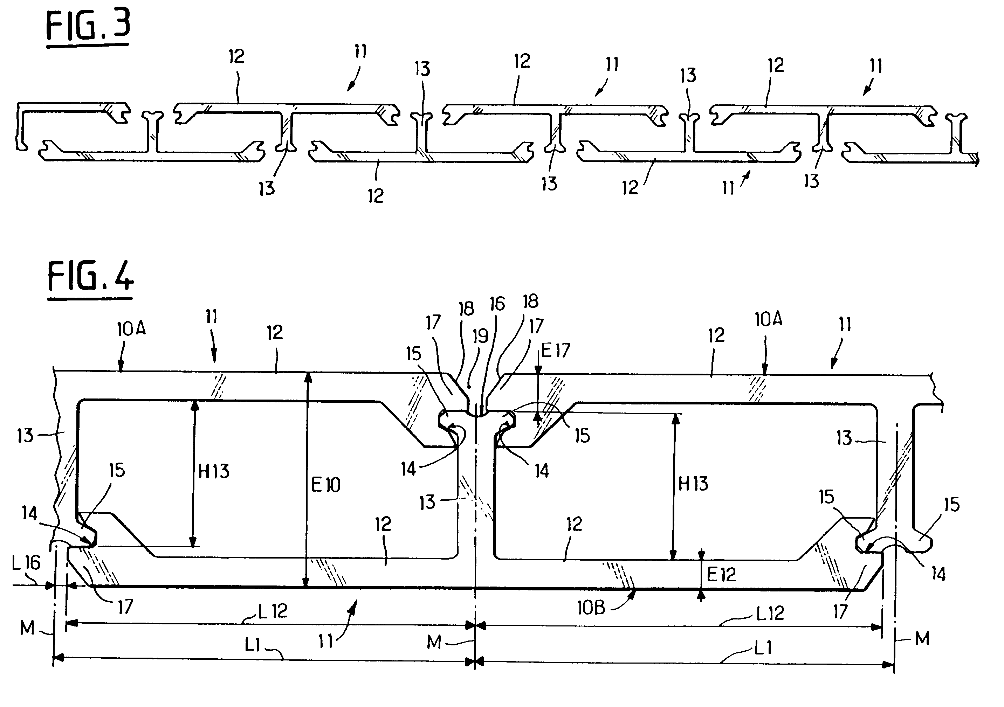

L'invention propose de nouvelles dispositions, qui ont précisément pour but de remédier aux quelques inconvénients des réalisations connues, et dont plusieurs variantes sont illustrées par les figures 3 à 5 ; 6 et 7 ; 8, 9 et 10 ; et, 14 et 15.

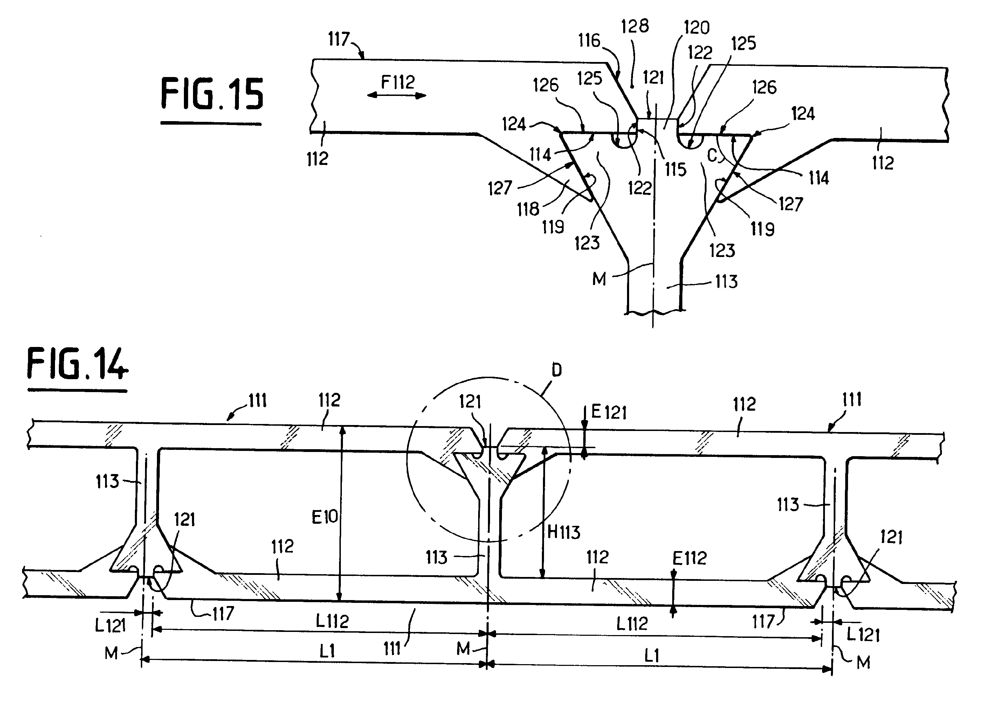

La variante représentée sur les figures 14 et 15 permet la réalisation d'un panneau complet, à partir de profilés élémentaires 111 en forme de T. La section droite d'un tel profilé comprend une première aile 112, qui constitue la barre horizontale du T et une deuxième aile 113, qui s'étend verticalement à partir du milieu de la première aile 112. La section droite est symétrique par rapport au plan médian M passant par la deuxième aile 113 et y étant parallèle.

Chaque extrémité d'une première aile 112 de la section droite d'un profilé comprend :
- une face interne 114, sensiblement parallèle à la direction F 112 de cette première aile 112 ;
- une face extrême 115, sensiblement perpendiculaire à ladite face interne 114 et s'y raccordant ;
- une face oblique 116, qui se raccorde à ladite face extrême 115 et à la face externe 117 de ladite extrémité de la première aile 112 ;
- une lèvre interne 118, qui est solidaire de la face interne 114 de l'extrémité de la première aile, qui s'écarte de ladite face interne 114 et qui constitue un organe de maintien présentant une face d'appui 119 décalée d'un angle C par rapport à la face interne 114, et dont la fonction sera précisée ci-après.

L'extrémité d'une deuxième aile 113 de la section droite d'un profilé comprend :
- une branche médiane 120, qui s'étend parallèlement au plan médian de symétrie M du T, dans le prolongement direct de ladite deuxième aile 113, et qui se termine par une face extrême 121 perpendiculaire au plan M, en étant délimitée en outre par deux faces latérales 122 parallèles au plan M ;
- deux branches latérales 123, qui divergent à partir du plan M, c'est-à-dire aussi à partir de la branche médiane 120, et qui ont notamment leur angle externe conformé en un coin 124 de même angle C que celui séparant la face interne 114 de l'extrémité de la première aile et la face d'appui 119 de la lèvre interne 118 ;
- deux cavités 125, qui sont ménagées dans les zones de raccordement des branches latérales 123 avec la branche médiane 120.

Lorsque divers profilés sont accostés, comme cela est représenté sur les figures 14 et 15, en vue de leur assemblage par soudage, et avant ledit soudage, les appuis suivants sont réalisés :
- de la face extrême 115 de l'extrémité d'un première aile 112 de la section droite d'un premier profilé sur l'une des faces latérales 122 de la branche médiane 120 d'un troisième profilé ;
- de la face interne 114 de l'extrémité de ladite première aile 112 de la section droite dudit premier profilé sur une face extrême 126 que comporte chaque branche latérale 123 du troisième profilé, face extrême 126 perpendiculaire au plan M, et parallèle aux premières ailes 112 dudit troisième profilé ;
- de la face d'appui 119 de la lèvre interne 118 de l'extrémité de la première aile 112 de la section droite dudit premier profilé sur la face oblique 127 délimitant, avec la face extrême 126, ledit coin 124 de ladite branche latérale 123 du troisième profilé.

Dans cette configuration, sont réalisés :
- un chanfrein de soudage 128, délimité par les faces obliques 116 des extrémités de premières ailes 112 appartenant à deux premiers profilés distincts et par la face extrême 121 de la branche médiane 120 d'un troisième profilé qui constitue le fond du chanfrein et forme un plateau de soudage apte à supporter le bain de métal en fusion au moment du soudage ;
- l'obturation des cavités 125 du troisième profilé par les extrémités desdites premières ailes des deux premiers profilés, lesdites cavités étant aptes à recueillir le métal en fusion au moment du soudage ;
- l'appui des deux faces des coins 124 des deux branches latérales 123 de la branche médiane de la section droite du troisième profilé exactement sur les faces 114 et 119 délimitant l'angle C séparant la face 119 de la lèvre 118 de la face interne 114, cet appui réalisant le maintien en position des extrémités des premières ailes 112 des sections droites des premiers profilés, par rapport à l'extrémité de la deuxième aile 113 de la section droite du troisième profilé, au moment du soudage, et évitant ainsi une séparation indésirable desdites extrémités des trois profilés que tendent à provoquer les contraintes thermiques de soudage.

Par ailleurs, il doit être noté que, pour réaliser leur assemblage, les divers profilés 111 ont été orientés de manière que leurs sections droites soient orientées avec un décalage de 180° l'une de la suivante, et qu'en outre une section droite soit décalée longitudinalement (parallèlement aux premières ailes 112) de la suivante d'une distance L1, séparant deux plans M successifs, égale à la demi longueur L112 d'une première aile 112, augmentée de la demi longueur L121 de la face 121(L1=L112+L121).

En outre,la hauteur H 113 d'une deuxième aile 113 est telle que l'épaisseur E 10 du panneau est égale à la somme E112+H113+E121=E10 de l'épaisseur E112 d'une première aile 112, de la hauteur H113 d'une hauteur H113 d'une deuxième aile 113, et de la profondeur E121 du chanfrein de soudage 121.

Finalement, à partir des positions des divers profilés successifs 111 telles que représentées sur la figure 14, la réalisation du soudage en des cordons de soudure parallèles, et horizontaux, d'abord de la face horizontale supérieure du panneau, ensuite, par retournement de l'ensemble de 180°, de l'autre face dudit panneau, permet de fabriquer avec un seul type de profilés 111 un panneau aussi important que désiré, aux dimensions désirées. A noter qu'un profilé à section droite en T est évidemment plus facile à obtenir par extrusion qu'un sous-ensemble complet tel que celui de la figure 1.

D'autres formes de profilés sont aptes à permettre la réalisation de panneaux conformes à l'invention.

Ainsi, la variante des figures 3 à 5 permet la réalisation d'un panneau complet 10, à partir de profilés élémentaires 11 également en forme en T. La section droite d'un tel profilé comprend une première aile 12, qui constitue la barre horizontale du T et une deuxième aile 13, qui s'étend verticalement à partir du milieu de la première aile 12. La section droite est symétrique par rapport au plan médian M passant par la deuxième aile 13 et y étant parallèle.

Chaque extrémité de la première aile 12 de la section droite d'un profilé est constituée par un renflement délimitant un logement 14 ouvert parallèlement à la première aile vers l'extérieur du T, logement de réception d'un ergot 15, ce qui, pour le profilé lui-même, correspond à une rainure de réception d'une sorte de tenon.

L'extrémité de la deuxième aile 13 de la section droite d'un profilé comporte précisément un épanouissement symétrique par rapport au plan M, constituant deux ergots 15 qui s'étendent sensiblement parallèlement à la première aile 12, la face supérieure médiane 16 de l'extrémité de la deuxième aile constituant la zone de jonction des deuxdits ergots et les prolongeant. Les divers profilés qui se succèdent, placés adjacents l'un du suivant, ont les ergots 15 de l'un introduit dans et emplissant les logements 14 de l'une des extrémités des deuxièmes ailes 12 de deux profilés 11 adjacents (figure 4).

Il peut être également noté que, pour réaliser l'assemblage, les profilés 11 ont été orientés de manière que leurs sections droites soient orientées avec un décalage de 180° l'une de la suivante, et qu'en outre une section droite est décalée longitudinalement (parallèlement aux premières ailes 12) de la suivante d'une distance L1, séparant deux plans M successifs, égale à la demi longueur L 12 d'une première aile 12, augmentée de la demi longueur L 16 de la face 16 (L 1 = L 12 + L 16).

Par ailleurs, la hauteur H 13 d'une deuxième aile 13 est telle que l'épaisseur E 10 du panneau est égale à la somme E 12 + H 13 + E 17 = E 10, de l'épaisseur E 12 d'une première aile 12, de la hauteur H 13 d'une deuxième aile 13, et de l'épaisseur E 17 de la paroi externe 17 délimitant un logement 14.

Il doit être noté que la face externe 18 de ladite paroi 17 est conformée en un chanfrein de l'extrémité de la première aile 12, et que dans la configuration d'assemblage précédant le soudage (figure 4), les ergots 15 sont contenus dans les logements 14 correspondants, les deux faces externes 18 des parois 17 formant une rainure 19 en V apte à permettre ledit soudage des lisières de trois profilés 11 ensemble, le fond de cette rainure 19 permettant le soudage étant délimité par la face supérieure 16 d'une deuxième aile 13, face supérieure 16 formant table de soudure pour soutenir le métal en fusion du bain de soudure.

Finalement, à partir des positions des divers profilés successifs 11 telles que représentées sur la figure 4, la réalisation du soudage en des cordons de soudure parallèles 20, et horizontaux, d'abord de la face horizontale supérieure 10A du panneau 10, ensuite, par retournement de l'ensemble de 180°, de la face 10B, initialement inférieure dudit panneau, permet de fabriquer avec un seul type de profilés 11 un panneau 10 aussi important que désiré, aux dimensions désirées. A noter qu'un profilé à section droite en T est éviemment plus facile à obtenir par extrusion qu'un sous-ensemble complet tel que celui de la figure 1.

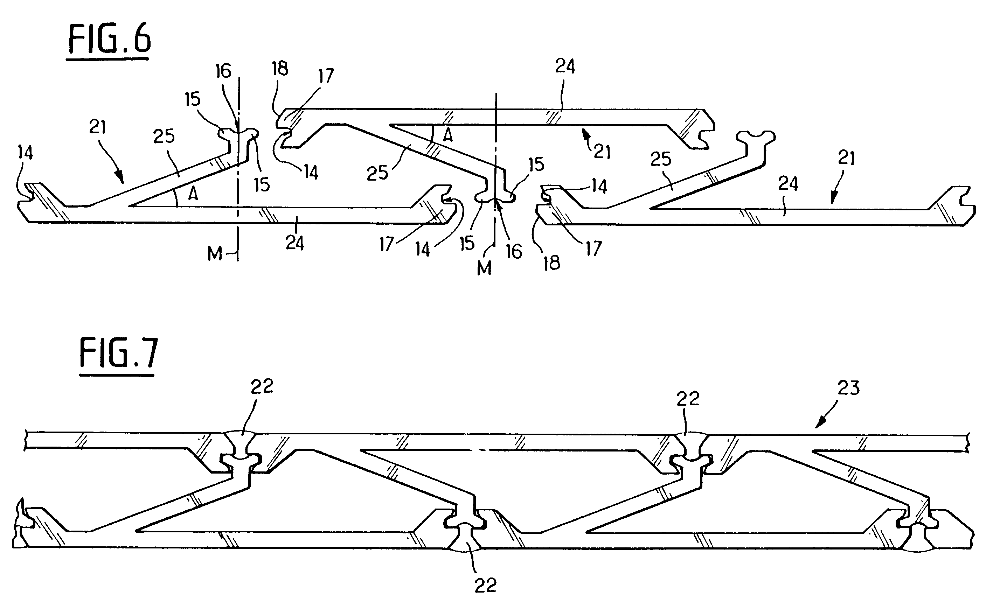

La forme en T de la section droite des profilés n'est pas la seule susceptible d'être adoptée. Ainsi, la forme représentée sur la figure 6 de profilés 21, permet, toujours par soudage en des cordons de soudure 22, de réaliser le panneau 23 de la figure 7. La section droite d'un profilé 21 est constituée par une première aile horizontale 24, et par une deuxième aile 25 disposée obliquement par rapport à la première aile 24, s'étendant à partir d'une extrémité de cette première aile 24, selon un angle aigu A, ici d'environ 30°, vers le plan vertical M de symétrie de la première aile 24.

Il convient d'observer que les deux extrémités de la première aile 24 d'un profilé 21 ont la même forme que les extrémités des premières ailes des profilés 11 et comportent notamment chacune des logements 14 et les parois 17 munies de leur chanfrein 18, l'extrémité d'une deuxième aile 25 d'un profilé 21 ayant elle-même la même forme que celle d'un profilé 11 (deux ergots 15 et face supérieure 16 de jonction), de sorte que l'assemblage avant soudage des profilés 21 est réalisé exactement comme celui des profilés 11 et permet la fabrication d'un panneau complet 23. Par ailleurs, la deuxième aile 25 est plus courte de la première aile 24.

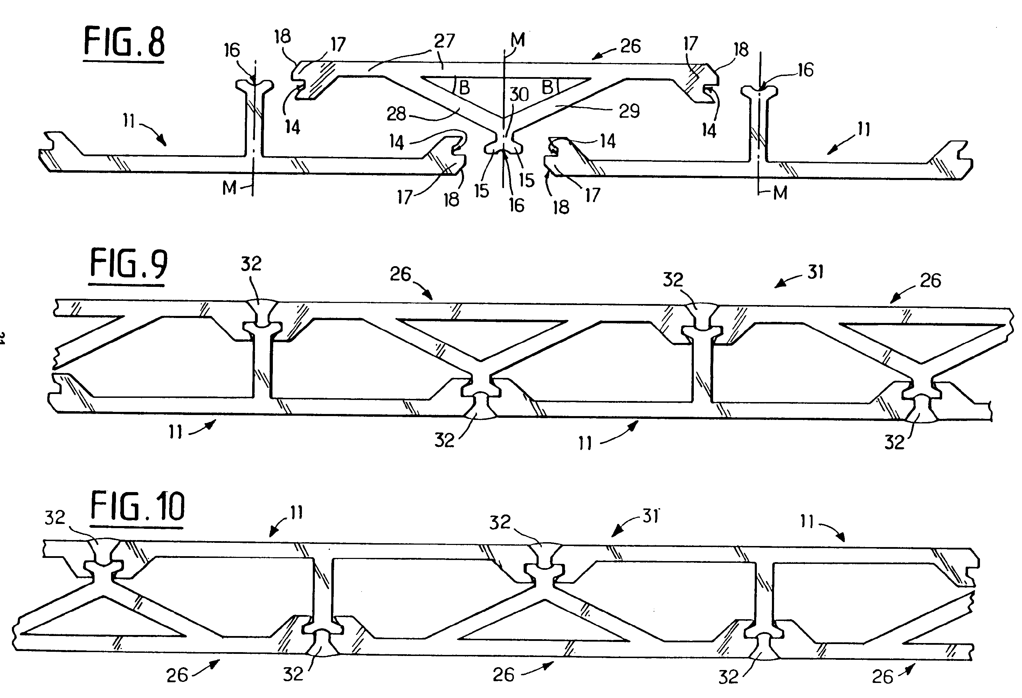

Les profilés d'un panneau peuvent en outre être de deux types différents, comme les réalisations des figures 8 à 10 l'illustrent.

D'abord, dans la réalisation des figures 8 et 9, les profilés inférieurs 11 ont la forme en T de la figure 4, alors que les profilés supérieurs 26 ont une forme dans laquelle une première aile horizontale 27 est associée à une deuxième aile 28 et à une troisième aile 29 ayant une extrémité commune 30 contenue dans le plan médian M perpendiculaire à la première aile 27 et constituant un plan de symétrie pour lesdites deuxième et troisième ailes 28,29. Ces ailes sont inclinées d'un angle B, ici de l'ordre de 50°, par rapport à la première aile 27, et ont, chacune, une position semblable à celle de la deuxième aile 25 d'un profilé 21. Les ailes 27-28-29 forment un triangle de renforcement. Comme celles des profilés 21, les extrémités des premières ailes 27 des profilés 26 sont identiques à celles des premières ailes 12 des profilés 11 (logements 14 et parois 17 munies de chanfrein 18), de même que l'extrémité commune 30 des deuxième et troisième ailes 28,29 d'un profilé 26 sont elles-mêmes identiques aux extrémités des deuxièmes ailes 13 des profilés 11 (ergots 15, face supérieure 16). Ainsi, les autres dimensions étant conservées, les profilés 26 peuvent être substitués aux profilés 11 pour aboutir, par exemple à la réalisation du panneau 31 de la figure 9, les divers profilés 11 et 26 étant assemblés par des cordons de soudure 32.

En fonction de la résistance souhaitée, notamment au poinçonnement et à la flexion, les profilés 11 et 26 peuvent être assemblés selon le mode d'assemblage des figures 8 et 9 (profilés supérieurs 26 et profilés inférieurs 11), ou selon le mode d'assemblage de la figure 10, qui se déduit de celui de la figure 9 par rotation de 180°.

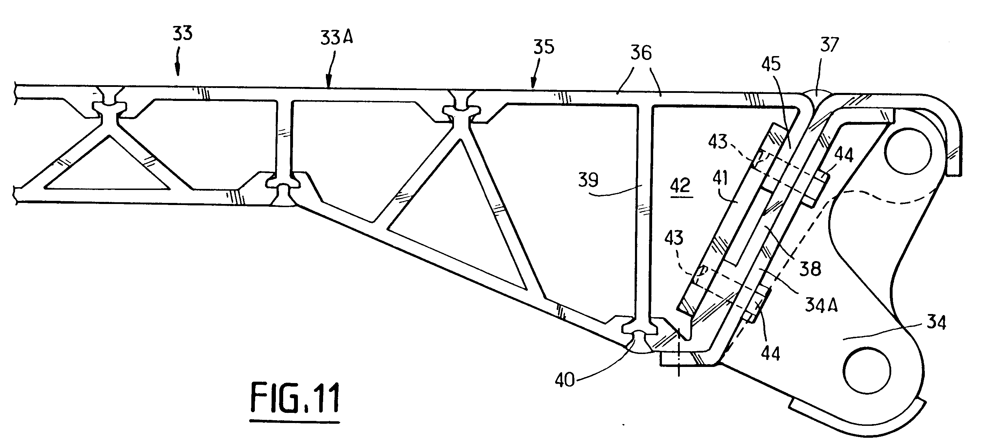

La figure 11 montre la fixation de l'extrémité d'un panneau 33 conforme à l'invention, analogue par exemple aux panneaux 10, 23 ou 31 précédemment décrits, à un support 34 permettant le montage pivotant de bras de réglage de la position dudit panneau par rapport par exemple au châssis d'un véhicule. Il s'agit alors du montage en porte-à-faux du panneau 33 constituant la plate-forme d'un hayon élévateur ; la face supérieure 33A du panneau étant, en service, horizontale.

L'avant dernier profilé 35 a une section droite conformée généralement en un T, dont l'une des extrémités de la barre horizontale 36 est soudée (37) au dernier profilé 38. L'extrémité de la jambe 39 du T est soudée également (40) au dernier profilé 38. Une contre-plaque 41, contenue dans le volume fermé 42 constitué par lesdits avant dernier 35 et dernier 38 profilé comporte des taraudages 43, qui en coopération avec des vis 44 traversant une plaque 34A du support 34 et une paroi plane du dernier profilé 38, permet la fixation du panneau 33 sur le support 34.

Il doit être remarqué que l'extrémité de la branche 36 du T, qui est soudée (37) à la partie supérieure du dernier profilé 38, comporte un bord rabattu 45 la prolongeant au-delà du cordon de soudure 37, bord rabattu 45 qui est interposé entre la contre-plaque 41 et la face interne du dernier profilé 38 et qui ainsi est serré entre ces deux pièces. Les efforts tendant à faire basculer le panneau 33 par rapport au support 34 sont donc, au moins en partie, repris par l'assemblage par vis-écrou (vis 44 - taraudages 43 de la contre-plaque 41), ce qui améliore la bonne tenue en service du cordon supérieur de soudure 37.

Bien entendu, il est conforme à l'invention de munir également l'extrémité de la jambe 39 du T d'un prolongement formant bord rabattu susceptible d'être serré entre la contre-plaque 41 et la plaque du dernier profilé 38 pour soulager la soudure inférieure 40.

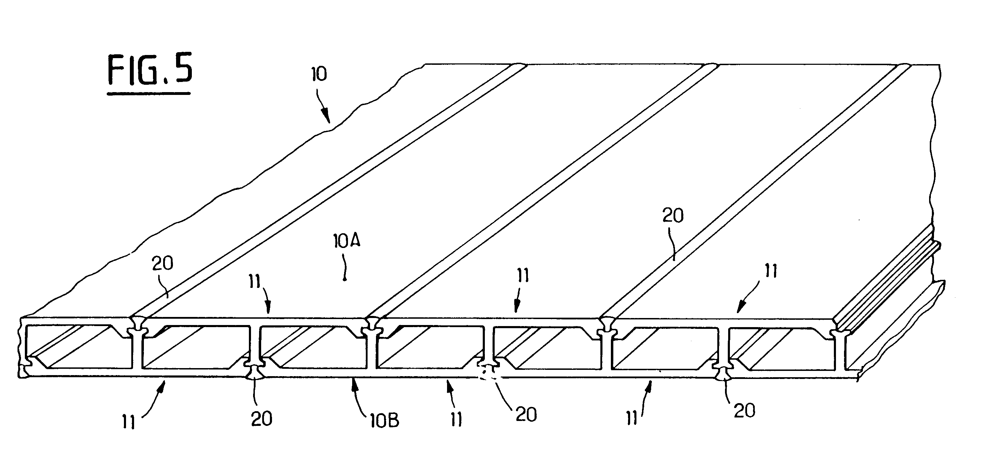

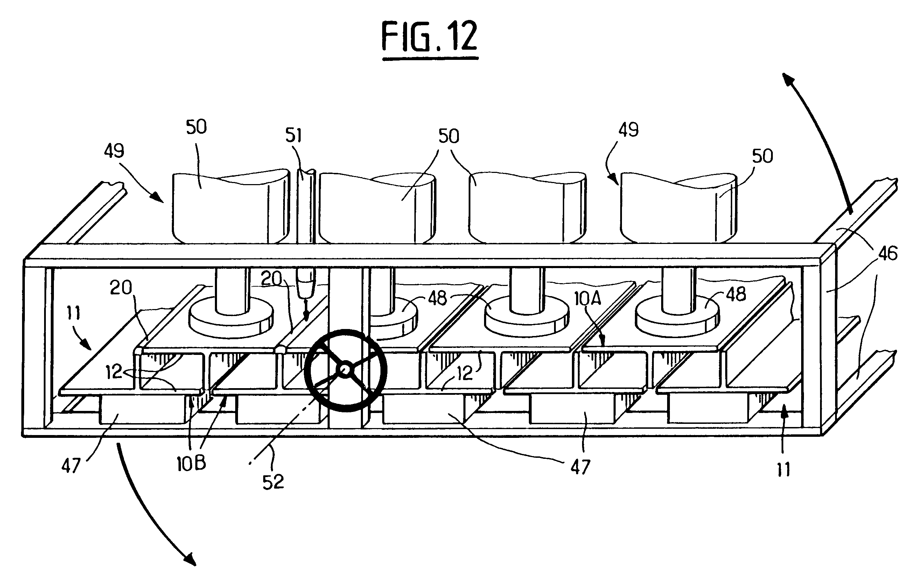

La figure 12 est une vue perspective, avec coupe partielle, qui illustre la première phase du montage de soudage du panneau 10 de la figure 5.

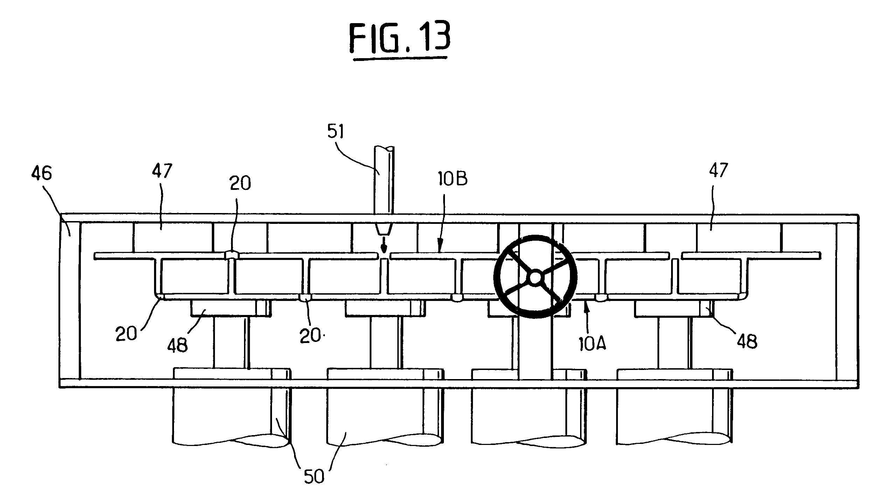

Un cadre 46 supporte des cales 47 sur chacune desquelles repose la première aile 12 d'un profilé inférieur 11. Des pièces mobiles de poussée 48 attelées aux pistons de vérin 49 dont les cylindres 50 sont fixés sur le cadre 46 permettent de réaliser l'immobilisation provisoire de l'ensemble des profilés 11 en venant en appui sur les premières ailes des profilés supérieurs 11, ceci après accostage des divers profilés en vue du soudage. Des têtes de soudage 51 permettent alors la réalisation des cordons de soudure 20 de la face supérieure 10A du panneau. Après la réalisation de tous les cordons de soudure de la face 10A, le cadre 46, qui est monté pivotant à cet effet, autour d'un axe horizontal 52 parallèle aux cordons de soudure 20, est retourné de 180° autour de l'axe 52, de manière à amener la face 10 B, initialement orientée vers le bas (figure 12), horizontale, et maintenant orientée vers le haut (figure 13).

Dans cette nouvelle position, il ne reste plus qu'à réaliser les cordons de soudure 20 de la face horizontale supérieure (la face 10 B) pour achever la réalisation de panneau.

Les avantages des dispositions qui viennent d'être décrits vont maintenant être exposés.

Tout d'abord, il peut être observé que les profilés 11, 21, 26, 35, 38 ont des sections droites dont les dimensions sont très inférieures à celles des sous-ensembles réalisés antérieurement (figure 1), et donc peuvent être obtenus par extrusion à des coûts très inférieurs à celui d'un tel sous-ensemble. Leur assemblage simple permet cependant de reconstituer un sous-ensemble, ou même de constituer un panneau complet aux dimensions désirées.

Selon l'utilisation souhaitée du panneau, les profilés ont des formes diverses, à choisir par exemple parmi celles des profilés 11, 21 et 26, étant admis que les formes de profilés, telles que celle du profilé 26, qui comportent des polygones, ici des triangles de renforcement, procurent des résistances, notamment au poinçonnement, particulièrement élevées.

Le bord rabattu 45 de la réalisation de la figure 11 permet par aileurs un renforcement intéressant de la zone du cordon de soudure 37.

Il aura été remarqué que les lisières des extrémités des ailes des profilés immobilisés provisoirement dans le cadre 46 sont toutes accessibles aux têtes de soudage 51, les cales 47 et les pièces de poussée 48 ne chevauchant pas les emplacements des cordons de soudure 20.

De plus, par simple retournement en bloc du cadre 46 et des profilés qu'il maintient en position, sans démontage, ni remontage supplémentaire, un panneau peut être entièrement soudé.

Il sera également noté que les cordons de soudure des faces supérieures 10A et inférieures 10B sont contenus dans des plans M distincts (figure 4), ce qui est favorable à une maîtrise satisfaisante des déformations dues aux contraintes thermiques de soudage. De plus, les contraintes en service sont mieux réparties le long du panneau, et non concentrées deux par deux dans un même plan M.

## Revendications

1. Panneau, notamment destiné à constituer un plancher, tel que celui de la plate-forme d'un hayon élévateur de véhicule, comprenant une première (10A) et une deuxième (10B) face et constitué par des sous-ensembles obtenus par extrusion, puis assemblés bord à bord, et enfin soudés le long des bords d'assemblage, caractérisé en ce que :
a) un sous-ensemble est constitué par un profilé (11) extrudé, dont la section droite comporte une première aile (12), qui est parallèle au plan de ladite deuxième face (10B) du panneau et qui comporte elle-même deux extrémités (14) appartenant à deux lisières du soudage d'assemblage du panneau, ladite section droite comportant une deuxième aile (13), qui s'écarte de la première aile (12) à partir de ladite deuxième face (10B) du panneau d'une distance (H13), mesurée perpendiculairement à ladite deuxième face du panneau, qui correspond à l'épaisseur (E10) dudit panneau, ladite deuxième aile (13) comportant une extrémité libre (15) appartenant à une autre lisière du soudage d'assemblage du panneau ;
b) lesdits profilés sont assemblés bord à bord par trois, deux premiers profilés (11) ayant les premières ailes (12) de leurs sections droites adjacentes par l'une (14) des extrémités de chacune desdites premières ailes, cependant que la première aile de la section droite d'un troisième profilé (11) s'étend parallèlement au plan de la deuxième face (10B) du panneau et a ses extrémités (14) qui sont adjacentes aux extrémités libres (15) des deuxièmes ailes (13) des sections droites des deux premiers profilés (11), l'extrémité libre (15-15) de la deuxième aile (13) de la section droite du troisième profilé étant adjacente auxdites extrémités adjacentes (14) des premières ailes (12) des sections droites des deux dits premiers profilés ;
c) les lisières auxquelles appartiennent lesdites extrémités adjacentes (14) des premières ailes des sections droites des deux premiers profilés et de la deuxième aile (15) de la section droite du troisième profilé sont soudées ensemble ;
d) les lisières auxquelles appartiennent lesdites extrémités adjacentes (15-15) de la deuxième aile (13) de la section droite de chacun des deux premiers profilés et de la première aile (12) de la section droite du troisième profilé sont soudées ensemble.

2. Panneau selon la revendication 1, caractérisé en ce que l'extrémité libre (16) de la deuxième aile (13) de la section droite d'un profilé est disposée à des distances (L12), mesurées parallèlement au plan de la première aile (12), de chacune des extrémités de ladite première aile, qui sont sensiblement égales.

3. Panneau selon l'une quelconque ds revendications 1 et 2, caractérisé en ce que :
e) l'extrémité libre de la deuxième aile (113) de la section droite dudit troisième profilé comporte deux branches latérales (123) qui divergent à partir de l'axe (M) de ladite deuxième aile, de part et d'autre d'une branche médiane (120) disposée parallèlement à l'axe (M) et dans le prolongement de ladite deuxième aile (113) ; et
f) chaque extrémité d'une première aile (112) de la section droite d'un desdits premiers profilé est délimitée par une face interne (114) et par une face extrême (115), toutes deux, après accostage desdits deux premiers profilés et du troisième profilé pour soudage, constituant un appui de ladite extrémité d'une première aile (112) sur l'extrémité (126) d'une desdites branches latérales (123) et sur la face (122) de la branche médiane (120) orientée vers ladite branche latérale (123) de la section droite dudit troisième profilé, respectivement, ladite face extrême (115) d'une extrémité de ladite première aile (112) de la section droite dudit premier profilé se prolongeant en une face oblique (116) par rapport à l'axe (M) de la deuxième aile (113) de la section droite dudit troisième profilé ;
de sorte qu'après réalisation dudit accostage en vue du soudage un chanfrein de soudage (128), dont le fond (121) constitue un plateau de soudage, est constitué par les faces obliques (116) des extrémités des deux premières ailes (112) des premiers profilés et par une face extrême (121) de ladite branche médiane, sensiblement perpendiculaire à l'axe (M) de la deuxième aile (113) de la section droite du troisième profilé, formant ledit plateau de soudage.

4. Panneau selon la revendication 3, caractérisé en ce que deux cavités (125) sont ménagées entre la branche médiane (120) de la deuxième aile (113) et, l'une (125), l'une des branches latérales (123), l'autre (125), l'autre branche latérale (123) de ladite deuxième aile (113) de la section droite d'un troisième profilé, cependant qu'après accostage des deux premiers et du troisième profilés en vue du soudage, mais avant ledit soudage, les deuxdites cavités (125) sont fermées par lesdites faces internes (114) et faces extrêmes (120) délimitant les extrémités des premières ailes (112) des sections droites des premiers profilés.

5. Panneau selon l'une quelconque des revendications 3 et 4, caractérisé en ce qu'une lèvre (118), solidaire de chaque première aile (112) de la section droite d'un premier profilé, s'écarte de la première aile (112) à partir de la face interne (114) de ladite première aile, et, après ledit accostage des profilés en vue de leur soudage, est appliquée sur la face externe (127) d'une branche latérale (123) de la section droite du troisième profilé.

6. Panneau selon l'une quelconque des revendications 1 et 2, caractérisé en ce que :
g) l'extrémité libre de la deuxième aile (13) de la section droite d'un profilé comporte deux ergots (15) qui s'étendent de part et d'autre du plan (M) perpendiculaire à la première aile (12)de la section droite dudit profilé, passant par la partie centrale (16) de ladite extrémité libre, les faces des deux ergots, qui sont les plus éloignées de ladite première aile, étant disposées sensiblement dans le prolongement l'une de l'autre ;
h) chaque extrémité d'une première aile (12) de la section droite d'un profilé comporte un logement (14) de réception d'un ergot (15) d'un autre profilé, logement dont l'une des parois se raccorde à la face externe de ladite première aile par un chanfrein (18) ;
de manière qu'après accostage de deux premiers et d'un troisième profilé pour soudage, les ergots (15) de l'extrémité libre de la deuxième aile (13) de la section droite du troisième profilé sont contenus, chacun, dans un logement (14) de réception d'une extrémité de la première aile (12) de la section droite de l'un des deux dits premiers profilés et qu'un chanfrein de soudage (19) est défini par les chanfreins (18) desdites parois (17) des logements (14) de réception et par la zone de raccord (16) du prolongement mutuel desdites faces des deux ergots (15) et a la forme générale d'un V dont le fond (16) est constitué par ladite zone de raccord de l'extrémité libre de la deuxième aile de la section droite du troisième profilé, formant support du bain de soudure au moment du soudage.

7. Panneau selon l'une quelconque des revendications 1 à 6, caractérisé en ce que les sections droites de certains profilés au moins (11) ont, chacune, une forme générale en T, la barre transversale du T (12) constituant la première aile de cette section droite et la jambe du T (13) constituant la deuxième aile de la section droite.

8. Panneau selon l'une quelconque des revendications 1 à 7, caractérisé en ce que les sections droites de certains profilés au moins (21) ont, chacune, une forme générale en coin, comportant une deuxième aile (25) qui est plus courte que la première aile (24) et qui s'étend obliquement par rapport à cette première aile (24), à partir d'une extrémité vers la partie médiane de la première aile, selon un angle aigu (A) par rapport à elle.

9. Panneau selon la revendication 8, caractérisé en ce que les sections droites de certains profilés au moins comportent, chacune, un triangle (27-28-29) fermé unique dont les côtés sont constitués par une partie de la première aile (27), la deuxième aile (28) et une troisième aile (29) disposée sensiblement symétriquement à ladite deuxième aile (28) par rapport à une perpendiculaire (M) à ladite première aile passant par l'extrémité libre (16) de la deuxième aile.

10. Panneau selon l'une quelconque des revendications 1 à 9, caractérisé en ce que les sections droites de certains profilés au moins comportent, chacune, un polygone unique de renforcement de la deuxième aile.

11. Panneau selon la revendication 7, caractérisé en ce que, hormis ses parties extrêmes, ce panneau est constitué exclusivement par l'assemblage de profilé (11) ayant une section droite conformée en un T.

12. Panneau selon la revendication 8, caractérisé en ce que, hormis ses parties extrêmes, ce panneau est constitué exclusivement par l'assemblage de profilés (21) ayant une forme générale en coin.

13. Panneau selon le groupe des revendications 7 et 9, caractérisé en ce que, hormis ses parties extrêmes, ce panneau est constitué par assemblage de profilés supérieurs d'un premier type (11 ou 26) avec des profilés inférieurs (26 ou 11) d'un deuxième type, les premier et deuxième types de profilés étant choisis parmi les deux types (11 et 26) dont les sections droites ont une forme en T et dont les sections droites comportent un triangle fermé unique.

14. Panneau selon l'une quelconque des revendications 1 à 13, caractérisé en ce qu'une de ses extrémités est constituée par un avant-dernier profilé (35), dont la section droite comporte deux ailes (36-39) formant un angle et par un dernier profilé (38), dont la section droite ferme ledit angle et est soudée (37-40) aux extrémités des deux dites ailes, cependant qu'un support (34) du panneau, apte à supporter ledit panneau, est fixé (44-43) sur le dernier profilé au moyen d'ensembles de vis et d'écrous, l'un (43-41) des éléments de chaque ensemble étant disposé à l'intérieur de la surface fermée (42) comprise entre les deux ailes (35-39) et la section droite du dernier profilé (38) qui ferme ledit angle, lesdites vis (38) traversant et assemblant le support et le dernier profilé, et qu'une (36) au moins desdites ailes de l'avant-dernier profilé a un prolongement conformé en un bord rabattu (45), qui est disposé au-delà d'une (37) des soudures d'assemblage desdits dernier et avant-dernier profilés, adjacent à ladite soudure, et qui est pincé entre ledit élément (41) d'un ensemble de vis et d'écrous et ledit dernier profilé (38).

15. Panneau selon la revendication 14, caractérisé en ce que ledit élément (41-43) est un écrou constitué par un taraudage (43) réalisé dans une contreplaque (41) disposée parallèlement au dernier profilé (38), à l'intérieur (42) de ladite surface fermée.

16. Panneau selon l'une quelconque des revendications 14 et 15, caractérisé en ce que le bord rabattu (45) est disposé à la partie supérieure (37) de la section droite de l'avant-dernier profilé (35), dans une configuration sensiblement horizontale de la face supérieure (33A) dudit panneau (33), cependant que ledit support réalise le support en porte à faux du panneau.

17. Procédé de soudage d'un panneau selon l'une quelconque des revendications 1 à 16, caractérisé en ce que :
i) on réalise le montage pivotant, autour d'un axe de pivotement (52), selon un angle au moins égal à 180°, d'un cadre de montage (46) ;
j) on met en place, les uns à côté des autres, en vue de leur montage, une première série de profilés (11) dits inférieurs, en vue de leur fixation provisoire sur ledit cadre de montage, leurs faces inférieures (12) étant soutenues par le cadre de montage (47-46) de manière telle que les lisières devant être soudées restent dégagées ;
k) on met en place les profilés (11), dits supérieurs, qui complètent le panneau ;
l) on fixe provisoirement (48) lesdits profilés inférieurs et supérieurs (11) sur ledit cadre de montage (46), de manière telle que les lisières des profilés supérieurs devant être soudées restent elles aussi dégagées et les faces supérieures desdits profilés supérieurs étant disposées sensiblement horizontalement ;
m) on réalise les soudures d'assemblage (20) desdites faces supérieures (10A) des profilés supérieurs ;
n) on fait pivoter en bloc le cadre de montage et l'ensemble des profilés qui y sont provisoirement fixés de manière à orienter vers le haut et à rendre sensiblement horizontale la face (10B) du panneau initialement orientée vers le bas ;
p) on réalise les soudures d'assemblage (20) des faces (10B) des profilés inférieurs initialement orientées vers le bas.

18. Procédé selon la revendication 17, caractérisé en ce qu'on rend parallèles à l'axe de pivotement (52) les lisières devant être soudées (20).

## Claims

1. Panel, especially intended to constitute a floor, such as that of the platform of a vehicle liftgate, comprising a first face (10A) and a second face (10B) and constituted by subassemblies which are obtained by extrusion, then joined edge to edge and finally -welded along the joining edges, characterised in that:
a) a subassembly is constituted by an extruded section (11), the cross-section of which includes a first flange (12) which is parallel to the plane of the said second face (10B) of the panel and which itself includes two ends (14) forming part of two panel-joining welding edges, the said cross-section including a second flange (13) which stands away from the first flange (12), from the said second face (10B) of the panel, at a distance (H13), measured perpendicularly to the said second face of the panel, which corresponds to the thickness (E10) of the said panel, the said second flange (13) including a free end (15) forming part of another panel-joining welding edge;
b) the said sections are joined edge to edge in threes, two first sections (11) having the first flanges (12) of their cross-sections adjacent by one (14) of the ends of each of the said first flanges, whereas the first flange of the cross-section of a third section (11) extends parallel to the plane of the second face (10B) of the panel and has its ends (14) which are adjacent to the free ends (15) of the second flanges (13) of the cross-sections of the two first sections (11), the free end (15-15) of the second flange (13) of the cross-section of the third section being adjacent to the said adjacent ends (14) of the first flanges (12) of the cross-sections of the two said first sections;
c) the edges, to which the said adjacent ends (14) of the first flanges of the cross-sections of the two first sections and of the second flange (15) of the cross-section of the third section belong, are welded together;
d) the edges, to which the said adjacent ends (15-15) of the second flange (13) of the cross-section of each of the two first sections and of the first flange (12) of the cross-section of the third section belong, are welded together.

2. Panel according to Claim 1, characterised in that the free end (16) of the second flange (13) of the cross-section of a section is arranged at distances (L12), measured parallel to the plane of the first flange (12), from each of the ends of the said first flange, which are approximately equal.

3. Panel according to either of Claims 1 and 2, characterised in that:
e) the free end of the second flange (113) of the cross-section of the said third section includes two lateral branches (123) which diverge from the axis (M) of the said second flange, on either side of a central branch (120) arranged parallel to the axis (M) and in the extension of the said second flange (113); and
f) each end of a first flange (112) of the cross-section of one of the said first sections is delimited by an inner face (114) and by an outermost face (115) both faces, after adjoining the said two first sections and the third section for welding, constituting a surface for the bearing of the said end of a first flange (112) on the end (126) of one of the said lateral branches (123) ant on the face (122) of the central branch (120), oriented towards the said lateral branch (123) of the cross-section of the said third section, respectively, said outermost face (115) of one end of the said first flange (112) of the cross-section of the said first section being extended as a face (116) which is oblique in relation to the axis (M) of the second flange (113) of the cross-section of the said third section; so that, after the adjoining has been carried out, with a view to welding, a welding bevel (128), the bottom (121) of which constitutes a welding bed, is constituted by the oblique faces (116) of the ends of the two first flanges (112) of the first sections and by an outermost face (121) of the said central branch, approximately perpendicular to the axis (M) of the second flange (113) of the cross-section of the third section, forming the said welding bed.

4. Panel according to Claim 3, characterised in that two cavities (125) are made between the central branch (120) of the second flange (113) and, for one cavity (125), one of the lateral branches (123), and for the other cavity (125), the other lateral branch (123) of the said second flange (113) of the cross-section of a third section, whereas, after adjoining the two first and the third sections with a view to welding, but before the said welding, the two said cavities (125) are closed by the said inner faces (114) and outermost faces (120) delimiting the ends of the first flanges (112) of the cross-sections of the first sections.

5. Panel according to either of Claims 3 and 4, characterised in that a lip (118), integral with each first flange (112) of the cross-section of a first section, stands away from the first flange (112) from the inner face (114) of the said first flange and, after the said adjoining of the sections with a view to welding them, is applied onto the outer face (127) of a lateral branch (123) of the cross-section of the third section.

6. Panel according to either of Claims 1 and 2, characterised in that:
g) the free end of the second flange (13) of the cross-section of a section includes two lugs (15) which extend on either side of the plane (M) perpendicular to the first flange (12) of the cross-section of the said section, passing through the central portion (16) of the said free end, the faces of the two lugs which are furthest away from the said first flange being arranged approximately in the extension of each other;
h) each end of a first flange (12) of the cross-section of a section includes a housing (14) for receiving a lug (15) of another section, one of the walls of which housing is connected to the outer face of the said first flange via a bevel (18); so that, after adjoining the two first and one third sections for welding, the lugs (15) of the free end of the second flange (13) of the cross-section of the third section are each contained in a housing (14) for receiving one end of the first flange (12) of the cross-section of one of the two said first sections and so that a welding bevel (19) is defined by the bevels (18) of the said walls (17) of the reception housings (14) and by the connection zone (16) of the mutual extension of the said faces of the two lugs (15) and has the general shape of a V, the bottom (16) of which is constituted by the said connection zone of the free end of the second flange of the cross-section of the third section, forming a support for the weld pool during the welding.

7. Panel according to any one of Claims 1 to 6, characterised in that the cross-sections of at least some (11) of the sections each have a general T-shape, the transverse bar (12) of the T constituting the first flange of this cross-section and the leg (13) of the T constituting the second flange of the cross-section.

8. Panel according to any one of Claims 1 to 7, characterised in that the cross-sections of at least some (21) of the sections each have a general wedge shape, including a second flange (25) which is shorter than the first flange (24) and which extends obliquely in relation to this first flange (24), from one end towards the central portion of the first flange, at an acute angle (A) in relation to it.

9. Panel according to Claim 8, characterised in that the cross-sections of at least some of the sections each include a single closed triangle (27-28-29), the sides of which are constituted by one portion of the first flange (27), the second flange (28) and a third flange (28) arranged approximately symmetrically to the said second flange (28) in relation to a perpendicular (M) to the said first flange passing through the free end (16) of the second flange.

10. Panel according to any one of Claims 1 to 9, characterised in that the cross-sections of at least some of the sections each include a single polygon for reinforcing the second flange.

11. Panel according to Claim 7, characterised in that, except for its outermost portions, this panel is exclusively constituted by the joining of section (11) having a cross-section shaped in the form of a T.

12. Panel according to Claim 8, characterised in that, except for its outermost portions, this panel is exclusively constituted by the joining of sections (21) having a general wedge shape.

13. Panel according to the set of Claims 7 and 9, characterised in that, except for its outermost portions, this panel is constituted by joining upper sections of a first type (11 of 26) with lower sections (26 or 11) of a second type, the first and second types of sections being chosen from the two types (11 and 26), the cross-sections of which have a T-shape and the cross-sections of which include a single closed triangle.

14. Panel according to any one of Claims 1 to 13, characterised in that one of its ends is constituted by a penultimate section (35), the cross-section of which includes two flanges (36-39) forming an angle and by a final section (38), the cross-section of which closes the said angle and is welded (37-40) to the ends of the two said flanges, whereas a support (34) for the panel, capable of supporting the said panel, is fixed (44-43) to the final section by means of nut-and-screw systems, one (43-41) of the elements of each system being arranged inside the closed surface (42) lying between the two flanges (35-39) and the cross-section of the final section (38) which closes the said angle, the said screws (38) passing through and joining the support and the final section, and whereas at least one (36) of the said flanges of the penultimate section has an extension shaped as a turned-over edge (45), which is arranged beyond one (37) of the welds for joining the said final and penultimate sections, adjacent to the said weld, and which is gripped between the said element (41) of one nut-and-screw system and said final section (38).

15. Panel according to Claim 14, characterised in that the said element (41-43) is a nut constituted by an internal thread (43) produced in a backplate (41) arranged parallel to the final section (38), on the inside (42) of the said closed surface.

16. Panel according to either of Claims 14 and 15, characterised in that the turned-over edge (45) is arranged at the upper portion (37) of the cross-section of the penultimate section (35), in an approximately horizontal configuration of the upper face (33A) of the said panel (33), whereas the said support produces the cantilevered support for the panel.

17. Method of welding a panel according to any one of Claims 1 to 16, characterised in that:
i) fitting is carried out by pivoting of a fitting frame (46) about a pivot axis (52) through an angle of at least 180°;
j) a first series of sections (11) called lower sections is installed, with sections beside each other, with a view to fitting them and with a view to temporarily fixing them to the said fitting frame, their lower faces (12) being held by the fitting frame (47-46) in such a way that the edges which are to be welded remain clear;
k) the sections (11), called upper sections, which complete the panel, are installed;
l) the said lower and upper sections (11) are temporarily fixed to the said fitting frame (46) in such a way that the edges of the upper sections which are to be welded also remain clear and the upper faces of said upper sections being arranged approximately horizontally;
m) the welds (20) joining said upper faces (10A) of the upper sections are produced;
n) a fitting frame and all the sections which are temporarily fixed thereto are pivoted as a single unit so as to face upwards and to render the face (10B) of the initially downward-facing panel approximately horizontal;
p) the welds (20) joining the faces (10B) of the initially downward-facing lower sections are produced.

18. Method according to Claim 17, characterised in that the edges which are to be welded (20) are made parallel to the pivoting axis (52).

## Patentansprüche

1. Platte, insbesondere dazu bestimmt, eine Bühne wie z.B. eine Hebebühne eines Kraftfahrzeugs zu bilden, die eine erste (10A) und eine zweite Seite (10B) aufweist und aus extrudierten Teilen besteht, die anschließend an ihren Kanten zusammengesetzt und schließlich entlang der Verbindungskanten verschweißt wurden, dadurch gekennzeichnet, daß:
a) ein Teilstück aus einem extrudierten Profil (11) besteht, dessen Querschnitt einen ersten Flügel (12) umfaßt, der parallel zur Ebene der besagten zweiten Seite (10B) der Platte verläuft und der selbst zwei Enden (14) aufweist, die zu zwei Kanten gehören, an denen die Platte zusammengeschweißt wird, wobei der Querschnitt einen zweiten Flügel (13) umfaßt, der vom ersten Flügel (12) von der besagten zweiten Seite (10B) der Platte aus in einem Abstand (H13) entfernt liegt, der senkrecht zur besagten zweiten Seite der Platte gemessen wird und der Dicke (E10) der besagten Platte entspricht, wobei dieser zweite Flügel (13) ein freies Ende (15) aufweist, das zu einer weiteren Kante gehört, an der die Platte zusammengeschweißt wird;
b) jeweils drei der genannten Profile an ihren Kanten miteinander verschweißt werden, wobei jeweils von zwei ersten Profilen (11) die ersten Flügel (12) ihrer Querschnitte an jeweils eines (14) der Enden dieser ersten Flügel anstoßen, während der erste Flügel des Querschnitts eines dritten Profils (11) sich parallel zur Ebene der zweiten Seite (10B) der Platte erstreckt und seine Enden (14) hat, die an die freien Enden (15) der zweiten Flügel (13) der Querschnitte der beiden ersten Profile (11) stoßen, wobei das freie Ende (15-15) des zweiten Flügels (13) des Querschnitts des dritten Profils an die besagten aneinanderstoßenden Enden (14) der ersten Flügel der Querschnitte der beiden ersten Profile stößt;
c) die Kanten, zu denen die besagten, aneinandergrenzenden Enden (14) der ersten Flügel der Querschnitte der beiden ersten Profile und der zweite Flügel (15) des Querschnitts des dritten Profils gehören, miteinander verschweißt werden;
d) die Kanten, zu denen die besagten aneinandergrenzenden Enden (15-15) des zweiten Flügels (13) des Querschnitts jedes der beiden ersten Profile und des ersten Flügels (12) des Querschnitts des dritten Profils gehören, miteinander verschweißt werden.

2. Platte nach Anspruch 1, dadurch gekennzeichnet, daß das freie Ende (16) des zweiten Flügels (13) des Querschnitts eines Profils in Abständen (L12) von jedem dieser Enden des besagten ersten Flegels angeordnet ist, wobei die Abstände parallel zur Ebene des ersten Flügels (12) gemessen werden und im wesentlichen gleich sind.

3. Platte nach Anspruch 1 und 2, dadurch gekennzeichnet, daß:
e) das freie Ende des zweiten Flügels (113) des Querschnitts des besagten dritten Profils zwei Seitenarme (123) umfaßt, die von der Achse (M) des besagten zweiten Flügels ausgehen, und zwar beidseits eines Mittelarms (120), der parallel zur Achse (M) und in Verlängerung dieses zweiten Flügels (113) angeordnet ist; und
f) jedes Ende eines ersten Flügels (112) des Querschnitts eines der ersten Profile von einer Innenfläche (114) und einer Abschlußfläche (115) begrenzt wird, die beide nach dem Aneinanderlegen der ersten beiden Profile und des dritten Profils zum Schweißen einen Halt bilden für das besagte Ende eines ersten Flügels (112) am Ende (126) eines der besagten Seitenarme (123) und an der Seite (122) des Mittelarms (120) bilden, die zum besagten Seitenarm (123) des Querschnitts des besagten dritten Profils hin ausgerichtet ist, bzw. die besagte Abschlußseite (115) eines Endes des ersten Flügels (112) des Querschnitts des ersten Profils sich in eine Seite (116) verlängert, die schräg zur Achse (M) des zweiten Flügels (113) des Querschnitts des besagten dritten Profils verläuft;
so daß nach dem Aneinanderlegen zum Schweißen durch die Schrägflächen (116) der Enden der beiden ersten Flügel (112) der ersten Profile und durch eine Außenseite (121) des besagten Mittelarms eine Schweißschräge (128) entsteht, deren Boden (121) eine Schweißfläche bildet, die im wesentlichen quer ist zur Achse (M) des zweiten Flegels (113) des Querschnitts des dritten Profils, wodurch diese Schweißfläche gebildet wird.

4. Platte nach Anspruch 3, dadurch gekennzeichnet, daß zwei Aussparungen (125) gearbeitet sind, und zwar eine (125) zwischen dem Mittelarm (120) des zweiten Flügels (113) und dem einen Seitenarm (123) und die andere zwischen dem Mittelarm des zweiten Flügels und dem anderen Seitenarm (123) des besagten zweiten Flügels (113) des Querschnitts eines dritten Profils, während nach Aneinanderlegen der beiden ersten Profile und des dritten Profils zum Schweißen, aber noch vor dem Schweißen, diese beiden Aussparungen (125) von den genannten Innenflächen (114) und Abschlußflächen (120) verschlossen werden, die die Enden der ersten Flügel (112) der Querschnitte der ersten Profile begrenzen.

5. Platte nach einem der Ansprüche 3 und 4, dadurch gekennzeichnet, daß eine Lippe (118), die aus einem Stück mit jedem ersten Flügel (112) des Querschnitts eines ersten Profils ist, sich vom ersten Flügel (112) von der Innenseite (114) des besagten ersten Flügels aus abspreizt und, nach dem besagten Aneinanderlegen der Profile für ihr Zusammenschweißen an die Außenfläche (127) eines Seitenarms (123) des Querschnitts des dritten Profils gedrückt wird.

6. Plätte nach einem der Ansprüche 1 und 2, dadurch gekennzeichnet, daß
g) das freie Ende des zweiten Flügels (13) des Querschnitts eines Profils zwei Nocken (15) aufweist, die sich beidseits der Ebene (M) befinden, die senkrecht zum ersten Flügel (12) dem Querschnitts des besagten Profils verläuft und durch den Mittelbereich (16) des besagten freien Endes führt, wobei die Seiten der beiden Nocken, die vom ersten Flügel am meisten entfernt sind, im wesentlichen in gegenseitiger Verlängerung verlaufen;
h) jedes Ende eines ersten Flügels (12) des Querschnitts eines Profils einen Aufnahmebereich (14) für einen Nocken (15) eines anderen Profils aufweist, wobei eine der Wände des Aufnahmebereichs mit einer Abschrägung (18) an die Außenfläche des besagten ersten Flügels anschließt;
so daß nach Zusammenfügen von zwei ersten Profilen und eines dritten Profils zum Verschweißen die Nocken (15) des freien Endes des zweiten Flügels (13) des Querschnitts des dritten Profils jeweils in einem Aufnahmebereich (14) eines Endes des ersten Flügels (12) des Querschnitts eines der beiden ersten Profile sitzen und die Abschrägungen (18) der Wände (17) der Aufnahmebereiche (14) und der Verbindungsbereich (16) der gegenseitigen Verlängerung der Seiten der beiden Nocken (15) eine Schweißschrägfläche (19) bilden, die insgesamt wie ein V aussieht, dessen Boden (16) von dem besagten Verbindungsbereich des freien Endes des zweiten Flügels des Querschnitts des dritten Profils gebildet wird und so eine Stützfläche für das Schweißbad beim Schweißen bildet.

7. Platte nach einem der Ansprüche 1 bis 6, dadurch gekennzeichnet, daß die Querschnitte zumindest bestimmter Profile (11) jeweils allgemein die Form eines T haben, wobei der Querstrich des T (12) den ersten Flügel dieses Querschnitts und der Längsstrich des T (13) den zweiten Flügel des Querschnitts bildet.

8. Platte nach einem der Ansprüche 1 bis 7, dadurch gekennzeichnet, daß die Querschnitte zumindest bestimmter Profile (21) jeweils insgesamt die Form eines Keils und einen zweiten Flügel (25) aufweisen, der kürzer als der erste Flügel (24) ist und gegenüber diesem ersten Flügel (24) von einem Ende zum Mittelbereich des ersten Flügels hin schräg in einem Spitzwinkel (A) verläuft.

9. Platte nach Anspruch 8, dadurch gekennzeichnet, daß die Querschnitte zumindest bestimmter Profile jeweils ein einzelnes, geschlossenes Dreieck (27-28-29) umfassen, dessen Seiten von einem Teil des ersten Flügels (27), dem zweiten Flügel (28) und einem dritten Flügel (29) gebildet werden, die bezüglich einer Senkrechten (M) zum ersten Flügel, die durch das freie Ende (16) des zweiten Flügels führt, im wesentlichen symmetrisch zum besagten zweiten Flegel (28) angeordnet sind.

10. Platte nach einem der Ansprüche 1 bis 9, dadurch gekennzeichnet, daß die Querschnitte zumindest bestimmter Profile zur Verstärkung des zweiten Flügels jeweils ein einzelnes Polygon aufweisen.

11. Platte nach Anspruch 7, dadurch gekennzeichnet, daß diese mit Ausnahme ihrer Endbereich ausschließlich durch die Zusammenfügung von Profilen (11) gebildet wird, die im Querschnitt ein T bilden.

12. Platte nach Anspruch 8, dadurch gekennzeichnet, daß diese mit Ausnahme ihrer Endbereich ausschließlich durch die Zusammenfügung von Profilen (21) gebildet wird, die insgesamt die Form von Keilen aufweisen.

13. Platte nach den Ansprüchen 7 bis 9, dadurch gekennzeichnet, daß diese mit Ausnahme ihrer Endbereich durch die Zusammenfügung von oberen Profilen eines ersten Typs (11 oder 26) mit unteren Profilen (26 oder 11) eines zweiten Typs gebildet wird, wobei erster und zweiter Profiltyp aus den beiden Typen (11 und 26) ausgewählt werden, deren Querschnitt ein T bilden und deren Querschnitte ein einzelnes, geschlossenes Dreieck bilden.

14. Platte nach einem der Ansprüche 1 bis 13, dadurch gekennzeichnet, daß eines ihrer Ende von einem vorletzten Profil (35), dessen Querschnitt zwei Flügel (36-39) umfaßt, die einen Winkel bilden, sowie von einem letzten Profil (38) gebildet wird, dessen Querschnitt den besagten Winkel schließt und an das an die Enden der beiden besagter Flügel geschweißt (37-40) wird, wohingegen eine Auflage (34) für die Platte, die diese Platte tragen kann, mittels Einheiten aus Schrauben und Muttern am letzten Profil befestigt wird (44-43), wobei eines (43-41) der Elemente jeder Einheit innerhalb der geschlossenen Fläche (42) zwischen den beiden Flügeln (35-39) und dem Querschnitt des letzten Profils (38), das den besagten Winkel schließt, angeordnet ist und die besagten Muttern (38) durch die Auflage und das letzte Profil hindurchführen und diese verbinden, und daß zumindest der eine (36) der Flügel des vorletzten Profils eine passende Verlängerung in eine abgeknickte Kante (45) aufweist, die jenseits einer (37) der Schweißnähte des besagten letzten und vorletzten Profils in unmittelbarer Nähe zu dieser liegt, und die zwischen dem besagten Element (41) einer Einheit aus Schrauben und Muttern und diesem letzten Profil (38) festgeklemmt ist.

15. Platte nach Anspruch 14, dadurch gekennzeichnet, daß dieses Element (41-43) eine Mutter ist, die von einem Gewinde (43) gebildet wird, das in eine Gegenplatte (41) gearbeitet ist, die parallel zum letzten Profil (38) innerhalb (42) der besagten, geschlossenen Fläche angeordnet ist.

16. Platte nach einem der Ansprüche 14 und 15, dadurch gekennzeichnet, daß die abgeknickte Kante (45) im oberen Bereich (37) des Querschnitts des vorletzten Profils (35) vorgesehen ist, in einer im wesentlichen horizontalen Anordnung der oberen Seite (33A) der besagten Platte (33), während die besagte Auflage die vorstehende Auflage für die Platte bildet.

17. Schweißverfahren für eine Platte nach einem der Ansprüche 1 bis 16, dadurch gekennzeichnet, daß:
i) man einen Montagerahmen (46) schwenkend um eine Schwenkachse (52) nach einem Winkel mindestens gleich 180° montiert;
j) man eine erste Reihe sogenannter unterer Profile (11) zu ihrer Montage für ihre vorläufige Befestigung im Montagerahmen nebeneinander anordnet, wobei ihre Unterseiten (12) durch den Montagerahmen (47-46) so gehalten werden, daß die zu schweißenden Kanten freibleiben;
k) man die sogenannten oberen Profile (11), die die Platte vervollständigen, einlegt;
l) man die genannten unteren und oberen Profile (11) provisorisch (48) im besagten Montagerahmen befestigt, so daß die Kanten der oberen Profile, die geschweißt werden sollen, ebenso freibleiben, und die Oberseiten der besagten oberen Profile in etwa horizontal angeordnet werden;
m) man die Oberseiten (10A) der oberen Profile miteinander verschweißt (20);
n) man den Montagerahmen und die vorläufig darauf befestigten Profile en bloc schwenkt, um die ursprünglich nach unten weisende Seite (10B) der Platte nach oben zu bringen und im wesentlichen horizontal anzuordnen;
p) man die ursprünglich nach unten weisenden Seiten (10B) der unteren Profile miteinander verschweißt (20).

18. Verfahren nach Anspruch 17, dadurch gekennzeichnet, daß man die zu schweißenden Kanten (20) parallel zur Schwenkachse (52) ausrichtet.
